# EUROPÄISCHE PATENTANMELDUNG

(11) **EP 1 248 055 A2**
(43) Veröffentlichungstag der Anmeldung: **09.10.2002**
(21) Anmeldenummer: 02006330.1
(22) Anmeldetag: 21.03.2002
(51) Int. Cl.: F25B 30/06

(54) **Gesamtumweltwärmequelle für eine Wärmepumpe**

(30) Priorität: 26.03.2001 DE 10114790; 11.05.2001 AT 7572001
(71) Anmelder: Vaillant GmbH, 42859 Remscheid (DE)
(72) Erfinder: Lang, Rainer, Dr., 51067 Köln (DE); Marth, Frank, 56581 Melsbach (DE); Marx, Uwe, 51375 Leverkusen (DE); Wienen, Johann, 46359 Heiden (DE)

(57) **Zusammenfassung**

Umweltwärmequelle für eine Wärmepumpe (16), **dadurch gekennzeichnet,** dass zumindest zwei der drei Umweltwärmequellen Luftkollektor (1), Erdwärmeaustauscher und Solarabsorber (2) in Reihe geschaltet sind und jeweils mittels eines Umschaltventils (3, 4) und einer Bypassleitung (13, 14) einzeln umgangen werden können.

## Beschreibung

Die Erfindung bezieht sich auf Umweltwärmequellen für eine Wärmepumpe.

Bei Wärmepumpen gemäß dem Stand der Technik kann z.B. mit Luftkollektoren die Außenluft als Wärmequelle erschlossen werden. Dies setzt jedoch voraus, dass die Außenlufttemperatur höher als die Soletemperatur im Luftkollektor ist; an kalten, sonnigen Wintertagen ist daher eine Nutzung der oberirdischen Umweltwärme nicht möglich.

Bei erfindungsgemäßen Umweltwärmequellen für Wärmepumpen wird dieser Nachteil beseitigt und auch dann oberirdisch Umweltwärme genutzt, wenn Sonnenstrahlung vorhanden ist. Dies wird durch die Kombination einer Wärmepumpe mit einem Luftkollektor und einem Solarabsorber sowie gegebenenfalls einem Erdwärmeaustauscher erreicht.

Aus der DE 33 18 975 A1 ist zwar bekannt, dass eine Brauchwasseranlage anstelle einer Wärmepumpe auch von einem Solarkollektor beheizt werden kann, doch wird der Solarkollektor als Alternative zur Wärmepumpe und nicht als Umweltwärmequelle für die Wärmepumpe verwendet. In der DE 26 38 357 A1 werden eine Wärmepumpe und ein Sonnenkollektor zum gemeinsamen Beheizen eines Wärmespeichers und über diesen Wärmespeicher zum Beheizen eines Heizsystems verwendet. In der US 4 325 357 werden zwei Umweltwärmequellen, ein Solarkollektor und eine Grundwasserkühleinrichtung, die parallel geschaltet sind, zum Klimatisieren von Luft genutzt.

Gegenüber dem oben genannten Stand der Technik werden nach der Erfindung gemäß den Patentansprüchen mehrere Umweltwärmequellen für eine Wärmepumpe verwendet.

Gemäß den Merkmalen des Anspruchs 1 ergibt sich der Vorteil, dass durch die intelligente Kombination mehrerer möglicher Umweltwärmequellen eine optimale Nutzung dieser ökologischen Energiequellen möglich ist.

Gemäß den Merkmalen der abhängigen Ansprüche 2 bis 4 werden weitere Ausgestaltungen der Erfindung beschrieben, aus denen einleuchtet, wie vorteilhaft die einzelnen Umweltwärmequellen genutzt werden.

Aus den Merkmalen des Anspruchs 5 ergibt sich der Vorteil, dass der Luftkollektor nur dann durchströmt wird, wenn der Energieeinsatz für das Gebläse gerechtfertigt ist.

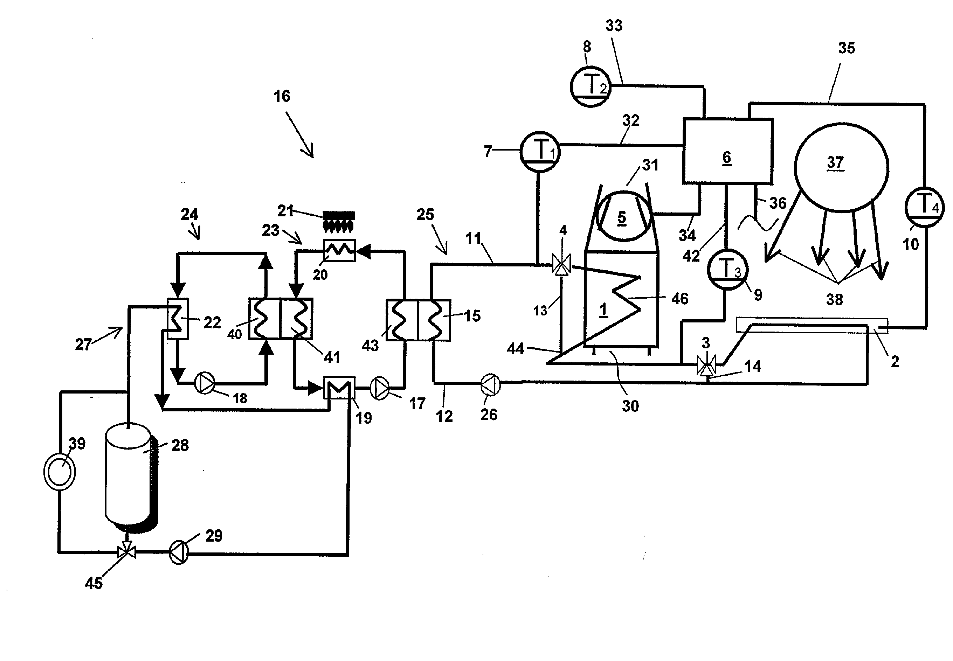

Ein Ausführungsbeispiel der Erfindung wird nun anhand der Fig. 1 erläutert. Fig. 1 zeigt die Wärmequelle für eine Wärmepumpe 16 mit erfindungsgemäßer Umweltwärmequelle. Die Wärmepumpe ist in der EP 1 074 799 A2 ausführlich beschrieben.

Die Wärmepumpe 16 verfügt über drei Wärmeträgerkreisläufe 23, 24 und 25. Im Wärmeträgerkreislauf 23 sind ein Desorber 41, ein Heiznetz-Wärmeaustauscher 19, eine Pumpe 17, ein Adsorber 43 sowie ein von einem Brenner 21 beheizter Wärmeaustauscher 20 seriell verschaltet und von Wasser durchströmt. Der Desorber 41 und der Adsorber 43 bestehen jeweils aus einem mit Zeolith befüllten Wärmeaustauscher. Zeolith besitzt die Eigenschaft, dass es sich bei Befeuchtung erhitzt und diese Feuchte durch Erhitzung ausgetrieben werden kann. Der Arbeitsprozess der Desorption endet, sobald das Zeolith seine Feuchte abgegeben hat. Der Arbeitsprozess der Adsorption endet, sobald das Zeolith mit Feuchtigkeit gesättigt ist.

Der Kondensator-Wärmeträger-Kreislauf 24 verfügt über einen Kondensator 40, einen Nutzwärme-Kondensator-Wärmeaustauscher 22 und eine Pumpe 18, die seriell verschaltet sind und von Wasser durchströmt werden. Der Verdampfer-Wärmeträger-Kreislauf 25 verfügt über einen Verdampfer 15 und eine Pumpe 26, die seriell verschaltet sind sowie die erfindungsgemäßen Umweltwärmequellen, die noch detaillierter beschrieben werden. Ein Verbraucherkreislauf 27 verbindet den Nutzwärme-Kondensator-Wärmeaustauscher 22 und den Heiznetz-Wärmeaustauscher 19 mit einem Warmwasserspeicher 28 und einer Raumheizung 39, wobei eine Pumpe 29 für die Förderung des Heizmediums im Kreislauf seriell integriert ist und ein Umschaltventil 45 die Durchströmung des Warmwasserspeichers 28 beziehungsweise der Raumheizung 39 schaltet. Module bestehend aus jeweils Kondensator 40 / Desorber 41 beziehungsweise Adsorber 43 / Verdampfer 15 sind derart aufgebaut, dass sie sich jeweils in einem mit destillierten Wasser gefüllten gemeinsamen Gehäuse befinden, wodurch durch dieses Kältemittel ein Wärmeaustausch von dem Verdampfer 15 auf den Adsorber 43 beziehungsweise von dem Desorber 41 auf den Kondensator 40 erfolgt. Weitere Details zum Aufbau der Wärmepumpe 16 können z.B. EP 1 074 799 A2 entnommen werden.

Der Verdampfer 15 ist über eine Zuleitung 11 und ein Umschaltventil 4 mit einem Luftkollektor 1 verbunden. Der Luftkollektor 1 verfügt einen Umgebungslufteintritt 30, einen Umgebungsluftaustritt 31 und ein Gebläse 5, das über eine elektrische Verbindungsleitung 34 mit einem Regler 6 verbunden ist. Im Luftkollektor 1 befindet sich eine von der Sole durchströmte Rohrschlange 46, die auf der Außenseite Lamellen zur Vergrößerung der luftseitigen Oberfläche aufweist. Parallel zu der Rohrschlange 46 des Luftkollektor 1 verläuft eine mit dem Dreiwegeventil 4 verbundene Bypassleitung 13 zu einer Zusammenführung 44.

Stromab des Luftkollektors 1 und der Bypassleitung 13 befindet sich ein weiteres Umschaltventil 3, stromab dessen sich, wiederum parallel geschaltet, ein Solarabsorber 2 und eine Bypassleitung 14 befinden. Stromab hiervon befindet sich eine Ableitung 12, welche mit dem Verdampfer 15 über eine Pumpe 26 verbunden ist. Stromauf des Umschaltventiles 4, in der Umgebungsluft, stromauf des Dreiwegeventiles 3 und am Austritt des Solarabsorbers 2 befinden sich Temperatursensoren 7, 8, 9 und 10, die über Signalleitungen 32, 33, 35 und 42 mit dem Regler 6 verbunden sind. Der Regler 6 ist über eine Signalleitung 36 mit der nicht dargestellten Regelung der Wärmepumpe 16 verbunden.

Der Wärmeträger im Wärmeträgerkreislauf 23 verläßt den von dem Brenner 21 beheizten Wärmeaustauscher 20. Er strömt danach durch den Desorber 41, wobei er sich abkühlt. Im Heiznetz-Wärmeaustauscher 19 wird er weiter abgekühlt und gibt dabei Nutzwärme an den Verbraucherkreislauf 27 ab. Danach wird er beim Durchströmen des Adsorbers 43 vorgeheizt, um schließlich wieder in den Wärmeaustauscher 20 zu strömen.

Im Kondensator-Wärmeträger-Kreislauf 24 wird der dort strömende Wärmeträger in dem Kondensator 40 aufgeheizt, um Nutzwärme im Kondensator-Wärmeaustauscher 22 an den Verbraucherkreislauf 27 abzugeben. Im Verdampfer-Wärmeträger-Kreislauf 25 wird Umgebungswärme, die im Luftkollektor 1 und / oder Solarabsorber 2 aufgenommen wird, in den Verdampfer 15 geleitet und an den Adsorber 43 weitergeleitet, wodurch der Verdampfer 15 das Medium im Verdampfer-Wärmeträger-Kreislauf 25 abkühlt und der Adsorber 43 das Medium im Wärmeträgerkreislauf 23 erhitzt. Eine nicht dargestellte Umschaltung verändert die Durchströmungsreihenfolge des Desorbers 41 sowie Adsorbers 43, sobald diese die Absorption beziehungsweise Desorption abgeschlossen haben und sorgt dadurch für einen quasi-kontinuierlichen Arbeitsprozeß.

Sole strömt in dem Verdampfer-Wärmeträger-Kreislauf 25 in die Zuleitung 11 mit ca. 0°C ein. Ist die Temperatur der Außenluft, die mit dem Temperatursensor 8 gemessen wird, größer als die Soletemperatur, die mit dem Temperatursensor 7 gemessen wird, so schaltet das Umschaltventil 4 die Strömung der Sole durch den Luftkollektor 1. Das Gebläse 5 wird von der Regelung 6 gestartet und Wärme aus der Luft auf die Sole übertragen. Ist die Lufttemperatur, die mit dem Temperatursensor 8 gemessen wird, kleiner oder gleich als die Soletemperatur, die mit dem Temperatursensor 7 gemessen wird, so schaltet das Dreiwegeventil 4 die Strömung der Sole durch die Bypassleitung 13 am Luftkollektor 1 vorbei. Ist die Soletemperatur, die mit dem Temperatursensor 9 gemessen wird, größer als die oder gleich der Soletemperatur, die mit dem Temperatursensor 10 gemessen wird, so schaltet das Umschaltventil 4 die Strömung durch die Bypassleitung 14 am Solarabsorber 2 vorbei. Ansonsten wird die Sole durch den Solarabsorber 2 geleitet. Sonnenstrahlen 38 der Sonne 37 erhitzen im Solarabsorber 2 die Sole. Anschließend gelangt die Sole über die Ableitung 12 wieder zur Wärmepumpe 16 zurück.

Auf diese Art kann bei warmer Luft und Sonnensschein sowohl im Luftkollektor 1 als auch im Solarabsorber 2 Wärme gewonnen werden. In warmen Sommernächten, wenn keine Sonne scheint, wird nur im Luftkollektor 1 Wärme gewonnen, während der Solarabsorber 2 umgangen wird. Währenddessen kann in kalten, klaren Wintertagen mit Hilfe des Solarabsorbers 1 Wärme gewonnen werden, während der Luftkollektor 1 umgangen wird.

## Patentansprüche

1. Gesamtumweltwärmequelle für eine Wärmepumpe (16), **dadurch gekennzeichnet, dass** zumindest zwei von drei Umweltwärmequellen, wie Luftkollektor (1), Erdwärmeaustauscher und Solarabsorber (2) in Reihe geschaltet sind und jeweils mit einer von einem Umschaltventil (3, 4) beherrschten Bypassleitung (13, 14) überbrückt sind.

2. Gesamtumweltwärmequelle für eine Wärmepumpe (16) gemäß Anspruch 1, **dadurch gekennzeichnet, dass** das Umschaltventil (4) dann die Durchströmung des Luftkollektors (1) freigibt, wenn die Temperatur des Wärmeträgers stromauf des Umschaltventils (4) vor dem Luftkollektor (1) kleiner der Umgebungslufttemperatur ist.

3. Gesamtumweltwärmequelle für eine Wärmepumpe (16) gemäß Anspruch 1 oder 2, **dadurch gekennzeichnet, dass** das Umschaltventil dann die Durchströmung des Erdwärmeaustauschers freigibt, wenn die Temperatur des Wärmeträgers stromauf des Umschaltventils vor dem Erdwärmeaustauscher kleiner der Erdtemperatur im Bereich des Erdwärmetauschers ist.

4. Gesamtumweltwärmequelle für eine Wärmepumpe (16) gemäß einem der Ansprüche 1 bis 3, **dadurch gekennzeichnet, dass** das Umschaltventil (3) dann die Durchströmung des Solarabsorbers (2) freigibt, wenn die Temperatur des Wärmeträgers stromauf des Umschaltventils (3) vor dem Solarabsorber (2) kleiner der Temperatur stromab am Austritt des Solarabsorbers (2) ist.

5. Gesamtumweltwärmequelle für eine Wärmepumpe (16) gemäß Anspruch 2, **dadurch gekennzeichnet, dass** das Umschaltventil (4) dann die Durchströmung des Luftkollektors (1) freigibt, wenn die Temperatur des Wärmeträgers stromauf des Umschaltventils (4) vor dem Luftkollektor (1) um 3 K kleiner der Umgebungslufttemperatur ist.
